# EUROPEAN PATENT APPLICATION

(11) **EP 4 459 750 A1**
(43) Date of publication of application: **06.11.2024**
(21) Application number: 22916126.0
(22) Date of filing: 27.12.2022
(51) Int. Cl.: H01M 10/658, F16L 59/02, H01M 10/625, H01M 10/651, H01M 10/6555

(54) **HEAT TRANSFER SUPPRESSION SHEET AND BATTERY PACK**

(30) Priority: 28.12.2021 JP 2021214812
(71) Applicant: IBIDEN CO., LTD., Ogaki-shi, Gifu 503-8604 (JP)
(72) Inventor: SHIMADA Shohei, Ibi-gun, Gifu 501-0695 (JP); JIMBO Naoyuki, Ibi-gun, Gifu 501-0695 (JP)
(74) Representative: Hoffmann Eitle
(86) International application number: PCT/JP2022/048315
(87) International publication number: WO 2023/127904

(57) **Abstract**

To further improve a shape retention property, strength, compression properties, and the like required for a heat transfer suppression sheet, and to prevent the shape retention property, the strength, the compression properties, and the like of the entire sheet from decreasing even when a battery cell experiences thermal runaway. A heat transfer suppression sheet contains: at least one of a first inorganic fiber (1) having a glass transition point of 800°C or lower and first inorganic particle (2) having a glass transition point of 800°C or lower; a second inorganic fiber (3) having a glass transition point of 1000°C or higher; second inorganic particle (4) having a glass transition point of 1000°C or higher; and an organic binder (5).

## Description

### TECHNICAL FIELD

The present invention relates to a battery pack to be a power source for an electric motor that drives, for example, an electric vehicle or a hybrid vehicle, and a heat transfer suppression sheet for use in a battery pack.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells is connected in series or in parallel to serve as a power source for a driving electric motor.

For the battery cells, a lithium ion secondary battery, which has a higher capacity and is capable of higher output than a lead-acid battery, a nickel-metal hydride battery, or the like, is mainly used. However, when one battery cell experiences thermal runaway due to an internal short circuit, an overcharge, or the like in the battery (that is, in the case of "abnormality of a battery cell"), propagation of heat to other adjacent battery cells may cause thermal runaway in other adjacent battery cells.

As a technique of suppressing the propagation of heat from the battery cell that has experienced thermal runaway as described above, a heat transfer suppression sheet is interposed between the battery cells. For example, Patent Literature 1 proposes a heat transfer suppression sheet containing at least one of a mineral-based powder and a flame retardant, and a matrix resin as an organic binder selected from a thermosetting resin, a thermoplastic elastomer, and a rubber.

### CITATION LIST

### PATENT LITERATURE

Patent Literature 1: JP2018-206605A

### SUMMARY OF INVENTION

### TECHNICAL PROBLEM

Here, in the heat transfer suppression sheet, it is required to well retain the powder that has a heat transfer suppression effect (that is, to suppress powder falling). In addition, when a battery cell experiences thermal runaway, the cell temperature may rise rapidly and reach nearly 1000°C. The heat transfer suppression sheet described in Patent Literature 1 contains the matrix resin to retain the mineral-based powder and the flame retardant, but at a high temperature during thermal runaway, the matrix resin melts and disappears, resulting in a remarkable decrease in shape retention property, strength, compression properties, and the like of the entire sheet.

The present invention has been made in view of the above problems, and an object thereof is to further improve a shape retention property, strength, compression properties, and the like required for a heat transfer suppression sheet, and to prevent the shape retention property, the strength, the compression properties, and the like of the entire sheet from decreasing even when a battery cell experiences thermal runaway.

### SOLUTION TO PROBLEM

The above object of the present invention is achieved by the following configuration [1] relating to a heat transfer suppression sheet.
[1] A heat transfer suppression sheet containing:
   at least one of a first inorganic fiber having a glass transition point of 800°C or lower and a first inorganic particle having a glass transition point of 800°C or lower;
   a second inorganic fiber having a glass transition point of 1000°C or higher;
   a second inorganic particle having a glass transition point of 1000°C or higher; and
   an organic binder.

   Preferred embodiments of the present invention relating to the heat transfer suppression sheet relate to the following [2] to [11].
[2] The heat transfer suppression sheet according to [1], in which the first inorganic fiber has an average fiber diameter larger than an average fiber diameter of the second inorganic fiber.
[3] The heat transfer suppression sheet according to [1] or [2], in which the first inorganic fiber has an average fiber length larger than an average fiber length of the second inorganic fiber.
[4] The heat transfer suppression sheet according to any one of [1] to [3], in which the first inorganic fiber has a degree of crimp smaller than a degree of crimp of the second inorganic fiber.
[5] The heat transfer suppression sheet according to any one of [1] to [4], in which the first inorganic fiber is linear or acicular, and the second inorganic fiber is dendritic or curly.
[6] The heat transfer suppression sheet according to any one of [1] to [5], in which
   the first inorganic fiber is an amorphous fiber, and
   the second inorganic fiber is composed of at least one kind selected from an amorphous fiber and a crystalline fiber.
[7] The heat transfer suppression sheet according to any one of [1] to [6], in which the first inorganic fiber is a fiber composed of at least one kind selected from a glass fiber, glass wool, slag wool, rock wool, an alkaline earth silicate fiber, a refractory ceramic fiber, a basalt fiber, and a soluble fiber.
[8] The heat transfer suppression sheet according to any one of [1] to [7], in which the first inorganic particle is a particle composed of at least one kind selected from a silica particle, a zinc oxide particle, a calcia particle, and a magnesia particle.
[9] The heat transfer suppression sheet according to any one of [1] to [8], in which the second inorganic fiber is a fiber composed of at least one kind selected from an alumina fiber, an alumina silicate fiber, a carbon fiber, a silicon carbide fiber, a natural mineral-based fiber, and a zirconia fiber.
[10] The heat transfer suppression sheet according to any one of [1] to [9], in which the second inorganic particle is a particle composed of at least one kind selected from a titania particle, a zirconia particle, a zircon particle, and a barium titanate particle.
[11] The heat transfer suppression sheet according to any one of [1] to [10], in which a content of at least one of the first inorganic fiber and the first inorganic particle is equal to or larger than a content of the organic binder.
   The above object of the present invention is also achieved by the following configuration [12] relating to a battery pack.
[12] A battery pack including:
   a plurality of battery cells connected in series or in parallel; and
   the heat transfer suppression sheet according to any one of [1] to [11].

### ADVANTAGEOUS EFFECTS OF INVENTION

Since, in the heat transfer suppression sheet according to the present invention, the first inorganic fiber is entangled with the second inorganic fiber to form a network, and are further bound by an organic binder, the first inorganic particle, the second inorganic particle, and other blending materials can be well retained. Therefore, the entire sheet has excellent shape retention property, strength, compression properties, and the like.

In addition, even when the organic binder disappears due to thermal runaway in a battery cell, the first inorganic fiber and the first inorganic particle having a relatively low glass transition point vitrify (soften) and function as a binder instead of the disappeared organic binder. At the same time, the second inorganic fiber and the second inorganic particle having a relatively high glass transition point remain in the heat transfer suppression sheet. Therefore, the entire sheet maintains the shape retention property, the strength, the compression properties, and the like.

In the battery pack according to the present invention, the above heat transfer suppression sheet is used. Therefore, the battery pack according to the present invention can suppress damages caused by thermal runaway of the battery cell to the minimum.

### BRIEF DESCRIPTION OF DRAWINGS

[Fig. 1] Fig. 1 is an SEM photograph of a cross section of a heat transfer suppression sheet according to an embodiment of the present invention immediately after production (during normal use).
[Fig. 2] Fig. 2 is an SEM photograph of a cross section of the heat transfer suppression sheet according to the embodiment of the present invention when heated to 800°C.
[Fig. 3] Fig. 3 is an SEM photograph of a cross section of the heat transfer suppression sheet according to the present embodiment when heated to 1000°C.
[Fig. 4] Fig. 4 is a cross-sectional view schematically showing a battery pack according to the present embodiment.

### DESCRIPTION OF EMBODIMENTS

Hereinafter, a heat transfer suppression sheet and a battery pack according to an embodiment of the present invention will be described in detail with reference to the drawings. Note that the present invention is not limited to the embodiments described below, and can be freely changed and implemented without departing from the gist of the present invention.

### [1. Heat Transfer Suppression Sheet]

A heat transfer suppression sheet according to the present invention contains:
(1) at least one of a first inorganic fiber having a glass transition point of 800°C or lower and a first inorganic particle having a glass transition point of 800°C or lower;
(2) a second inorganic fiber having a glass transition point of 1000°C or higher;
(3) a second inorganic particle having a glass transition point of 1000°C or higher; and
(4) an organic binder.

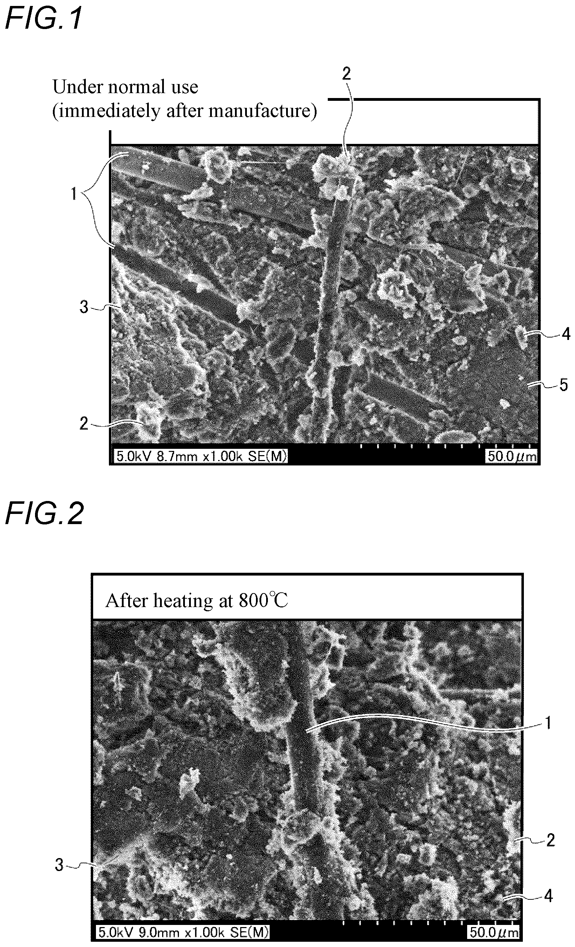

During a normal operation, that is, during normal use of a battery cell, a first inorganic fiber and a second inorganic fiber are intricately entangled within a heat transfer suppression sheet, and the first inorganic particle and the second inorganic particle are well retained therebetween and bound by an organic binder (see Fig. 1 showing a heat transfer suppression sheet during normal use (immediately after production). Therefore, the heat transfer suppression sheet has excellent shape retention property, strength, compression properties, and the like.

However, when the battery cell experiences thermal runaway (abnormality of a battery cell), the heat transfer suppression sheet is heated to a high temperature, the organic binder having a low melting point firstly disappears (see Fig. 2 showing the heat transfer suppression sheet after heating to 800°C), and there is a risk that the shape retention property, the strength, the compression properties, and the like of the entire sheet remarkably decrease. Then, the temperature further rises and when it is higher than the glass transition point of the first inorganic fiber and the first inorganic particle, which have a relatively low glass transition point, the first inorganic fiber and the first inorganic particle vitrify (soften) and become film-like and function as a binder instead of the disappeared organic binder, which contributes to the shape retention property, the strength, the compression properties, and the like of the entire sheet.

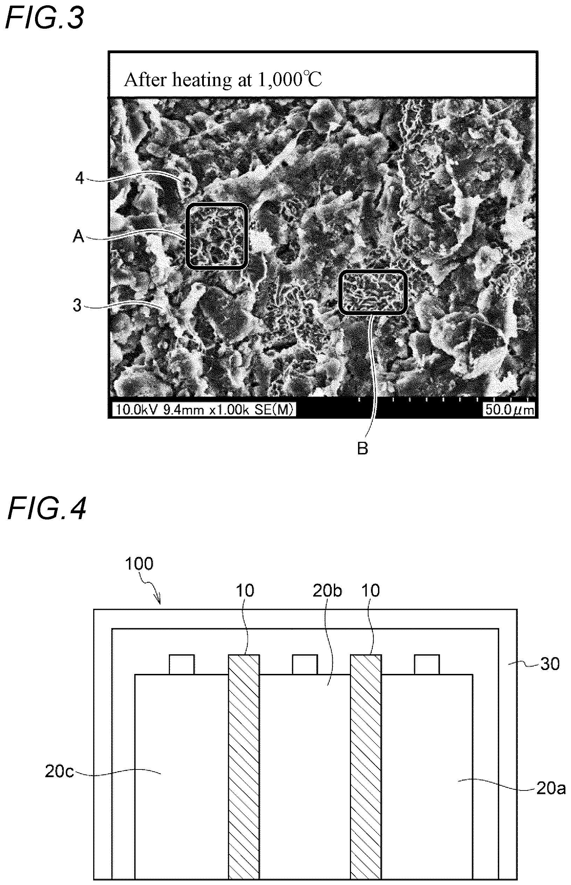

Thereafter, even when the temperature rises, the second inorganic fiber and the second inorganic particle having a relatively high glass transition point remain in the heat transfer suppression sheet (see Fig. 3 showing the heat transfer suppression sheet after heating to 1000°C), and the entire sheet maintains the shape retention property, the strength, the compression properties, and the like. At the same time, minute spaces are maintained between the second inorganic fibers, between the second inorganic particles, and between the second inorganic fiber and the second inorganic particle, and in these spaces, air exhibits a heat insulation effect, and an excellent heat transfer suppression performance is exhibited.

Hereinafter, the first inorganic fiber, the first inorganic particle, the second inorganic fiber, the second inorganic particle, and the organic binder will be described in more detail.

### (kind of First Inorganic Fiber)

The first inorganic fiber is not particularly limited as long as it has a glass transition point of 800°C or lower, and is preferably an amorphous fiber. When the first inorganic fiber and further the first inorganic particle having a relatively low glass transition point are exposed to a temperature higher than the glass transition point, the surfaces thereof soften and bind the second inorganic particle and the second inorganic fiber. Therefore, the mechanical strength of the heat transfer suppression sheet can be improved.

Specifically, as the first inorganic fiber, a glass fiber (Tg: 500°C to 550°C), glass wool, slag wool, rock wool, an alkaline earth silicate fiber, a refractory ceramic fiber, a basalt fiber, and a soluble fiber can be suitably used. Among them, a fiber containing SiO₂ is preferred, and a glass fiber is more preferred because of being inexpensive, easily available, and having excellent handling properties. These fibers may be used alone or in combination in plural kinds thereof.

### (kind of First Inorganic particle)

The first inorganic particle is not particularly limited as long as it has a glass transition point of 800°C or lower. Silica particle (Tg: 500°C to 550°C), zinc oxide particle, calcia particle, and magnesia particle can be suitably used.

These particles may be used alone or in combination in plural kinds thereof. It is also preferable to use a large-diameter particle and a small-diameter particle in combination. When the small-diameter inorganic particle enter gaps between the large-diameter inorganic particles, a more dense structure is formed, and the strength of the heat transfer suppression sheet can be further improved.

### (kind of Second Inorganic Fiber)

The second inorganic fiber is not particularly limited as long as it has a glass transition point of 1000°C or higher, and is a fiber composed of at least one kind selected from an amorphous fiber and a crystalline fiber. During thermal runaway of battery cells, even when the first inorganic fiber softens and melts, the second inorganic fiber having a relatively high glass transition point can remain within the sheet, maintain the sheet shape, and continue to be present between the battery cells. In addition, since the second inorganic fiber remains, there are minute spaces between the second inorganic fiber and the second inorganic particle, and when the second inorganic fiber remains in the first inorganic fiber or the first inorganic particle, the minute spaces therebetween are maintained, air exhibits a heat insulation effect, and an excellent heat transfer suppression performance can be exhibited.

Specifically, an alumina fiber, an alumina silicate fiber, a carbon fiber, a silicon carbide fiber, a natural mineral-based fiber such as wollastonite, and a zirconia fiber can be suitably used. These fibers may be used alone or in combination in plural kinds thereof.

### (kind of Second Inorganic particle)

The second inorganic particle is not particularly limited as long as they have a glass transition point of 1000°C or higher. Titania particle, zirconia particle, zircon particle, and barium titanate particle can be suitably used. Among them, titania particle is preferred. Titania has a high refractive index and a high effect of diffusely reflecting light and blocking radiant heat in a high temperature range of 500°C or higher. Therefore, it is preferable for improving the heat resistance of the heat transfer suppression sheet.

These particles may be used alone or in combination in plural kinds thereof. Note that, in the case of using plural kinds of the particles in combination, similar to the first inorganic particle, it is preferable to use a large-diameter particle and a small-diameter particle in combination, and the small-diameter inorganic particle enters gaps between the large-diameter inorganic particles, leading to a more dense structure and improved strength.

Note that, the second inorganic fiber and the second inorganic particle preferably have a higher glass transition point in order to have compatibility in a higher temperature.

Subsequently, the first inorganic fiber and the second inorganic fiber preferably have the shapes shown below.

### (Shapes of First Inorganic Fiber and Second Inorganic Fiber)

In the present invention, an inorganic fiber having a large average fiber diameter (large diameter) has an effect of improving the mechanical strength and the shape retention property of the heat transfer suppression sheet. When the first inorganic fiber or the second inorganic fiber has a large diameter, the above effect can be obtained. Since external impacts may act on the heat transfer suppression sheet, the containing of a large-diameter inorganic fiber improves the impact resistance. External impacts include, for example, a pressing force due to expansion of battery cells, or a wind pressure due to ignition of battery cells.

In addition, in order to further improve the mechanical strength and the shape retention property, it is particularly preferable that the large-diameter inorganic fiber is linear or acicular. Note that a linear or acicular fiber refers to a fiber having a degree of crimp, which will be described later, of, for example, less than 10%, and preferably 5% or less.

More specifically, the average fiber diameter of the large-diameter inorganic fiber is preferably 1 µm or more, and more preferably 3 µm or more. However, when the large-diameter inorganic fiber is too thick, the moldability and the processability into a heat transfer suppression sheet may decrease. Therefore, the average fiber diameter is preferably 20 µm or less, and more preferably 15 µm or less.

In addition, the fiber length of the large-diameter inorganic fiber is preferably 100 mm or less since when it is too long, the moldability and the processability may decrease. Further, when the large-diameter inorganic fiber is too short, the shape retention property and the mechanical strength decrease. Therefore, the fiber length thereof is preferably 0.1 mm or more.

On the other hand, an inorganic fiber having a small average fiber diameter (small diameter) has an effect of improving the retention property for the inorganic particle, and increasing the flexibility of the heat insulation material. Therefore, when the other one of the first inorganic fiber and the second inorganic fiber has a small diameter, the above effect can be obtained.

More specifically, in order to improve the retention property for the inorganic particle, it is preferable that a small-diameter inorganic fiber is easily deformable and has flexibility. Therefore, the average fiber diameter of the small-diameter inorganic fiber is preferably less than 1 µm, and more preferably 0.1 µm or less. However, when the small-diameter inorganic fiber is too thin, the small-diameter inorganic fiber is easily broken, and the ability to retain the inorganic particle decreases. In addition, a large proportion of fibers remain entangled in the heat insulation material without retaining the inorganic particle, and in addition to a decrease in ability to retain the inorganic particle, the moldability and the shape retention property also become poor. Therefore, the average fiber diameter of the small-diameter inorganic fiber is preferably 1 nm or more, and more preferably 10 nm or more.

In addition, the fiber length of the small-diameter inorganic fiber is preferably 0.1 mm or less since when it is too long, the moldability and the shape retention property decrease. Further, when the small-diameter inorganic fiber is too short, the shape retention property and the mechanical strength decrease. Therefore, the fiber length thereof is preferably 1 µm or more.

Further, the small-diameter inorganic fiber is preferably dendritic or curly. Having such a shape, the small-diameter inorganic fiber is entangled with the large-diameter inorganic fiber and the inorganic particle in the heat transfer suppression sheet. Therefore, the ability to retain the inorganic particle is improved. In addition, when the heat transfer suppression sheet is subjected to a pressing force or a wind pressure, the small-diameter inorganic fiber is suppressed from slipping and moving, thereby improving the mechanical strength, particularly against an external pressing force or impact.

Note that dendritic refers to a two-dimensionally or three-dimensionally branched structure, for example, feather shape, tetrapod shape, radial, or three-dimensional mesh shape. When the small-diameter inorganic fiber is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example. Degree of crimp (%) = (fiber length - distance between fiber ends)/(fiber length) × 100

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the small-diameter inorganic fiber is preferably 10% or more, and more preferably 30% or more. When the degree of crimp is small, the ability to retain the first inorganic particle and the second inorganic particle decreases, and entanglement (network) between the large-diameter inorganic fibers and with the large-diameter inorganic fiber is difficult to form.

As described above, it is preferable that the average fiber diameter of either the first inorganic fiber or the second inorganic fiber is larger than the average fiber diameter of the other one. In the present invention, it is more preferable that the average fiber diameter of the first inorganic fiber is larger than the average fiber diameter of the second inorganic fiber. When the first inorganic fiber has a large average fiber diameter, the first inorganic fiber softens early, and thus becomes film-like and hardens as the temperature rises. On the other hand, when the second inorganic fiber has a small average fiber diameter, even when the temperature rises, the small-diameter second inorganic fiber remains in the form of fiber, so that the structure of the heat transfer suppression sheet can be retained and powder falling can be prevented.

Note that, it is most preferable that both a large-diameter linear or acicular inorganic fiber and a small-diameter dendritic or curly inorganic fiber are used as the first inorganic fiber, and both a large-diameter linear or acicular inorganic fiber and a small-diameter dendritic or curly inorganic fiber are used as the second inorganic fiber, since the retention effect for the first inorganic particle and the second inorganic particle, the mechanical strength, and shape retention property can be further improved.

In addition, when the average fiber length of the first inorganic fiber is larger than that of the second inorganic fiber, the orientation length is increased, so that the heat dissipation property is further improved. Further, the second inorganic fiber is dendritic or curly, can thus be easily intertwined with the first inorganic fiber, and is effective for a heat transfer path and shape retention.

In addition, it is preferable that the first inorganic particle and the second inorganic particle have the following forms.

### (Forms of First Inorganic particle and Second Inorganic particle)

Both the first inorganic particle and the second inorganic particle are not particularly limited in form and size, and preferably include at least one selected from a nanoparticle, a hollow particle, and a porous particle. When the average secondary particle diameter thereof is 0.01 µm or more, both the first inorganic particle and the second inorganic particle are easily available and an increase in production cost can be suppressed. When the average secondary particle diameter is 200 µm or less, a desired heat insulation effect can be obtained. Therefore, the average secondary particle diameter of the first inorganic particle and the second inorganic particle is preferably 0.01 µm or more and 200 µm or less, and more preferably 0.05 µm or more and 100 µm or less.

It is more preferable that nanoparticle is contained. The nanoparticle refers to a nanometer-order particle having a spherical or nearly spherical shape and having an average primary particle diameter of less than 1 µm. The nanoparticle has a low density and thus suppresses conductive heat transfer, and when the nanoparticle is used, voids are further finely dispersed, so that an excellent heat insulation property of suppressing the convective heat transfer can be obtained. Therefore, the conduction of heat between adjacent nanoparticles can be suppressed during normal use of a battery in a normal temperature range.

When the average primary particle diameter of the nanoparticle is limited to a specific range, an even higher heat insulation property can be obtained. That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet can be maintained. Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

As the nanoparticle, for example, since silica nanoparticle is a material having a high heat insulation property and have a few contact points between particles, the amount of heat conducted by the silica nanoparticle is smaller than that in a case of using silica particle having a large particle diameter. In addition, since a generally available silica nanoparticle has a bulk density of about 0.1 g/cm³, for example, even when battery cells disposed on both sides of the heat transfer suppression sheet thermally expand and a large compressive stress is applied to the heat transfer suppression sheet, the size (area) or the number of contact points between the silica nanoparticles does not increase remarkably, and the heat insulation property can be maintained. Therefore, it is preferable to use the silica nanoparticle as the silica particle, which are the first inorganic particle. As the silica nanoparticle, wet silica, dry silica, aerogel, or the like can be used.

### (Organic Binder)

As the organic binder, a polymer aggregate, an acrylic emulsion, and the like, which have been used in the related art in a heat transfer suppression sheet, can be appropriately used.

### (Contents of First Inorganic Fiber, First Inorganic particle, Second Inorganic Fiber, and Second Inorganic particle in Heat Transfer Suppression Sheet)

With respect to the total mass of the heat transfer suppression sheet, the content of the first inorganic particle is preferably 25 mass% or more and 80 mass% or less, and the content of the second inorganic particle is preferably 1 mass% or more and 30 mass% or less. As described above, since the first inorganic fiber and the first inorganic particle replace the organic binder when the organic binder disappears, it is preferable that the content thereof is equal to or larger than that of the organic binder. Note that, the content of the organic binder is preferably 5 mass% or more and less than 25 mass% in consideration of a binding performance.

In addition, the content of the first inorganic fiber is preferably 3 mass% or more and 30 mass% or less, and more preferably 5 mass% or more and 15 mass% or less. The content of the second inorganic fiber is preferably 3 mass% or more and 30 mass% or less, and more preferably 5 mass% or more and 15 mass% or less. Since first inorganic fiber is entangled with the second inorganic fiber to form a three-dimensional network to retain the first inorganic particle, the second inorganic particle, and other blending materials to be described later, when the content is less than the above, such effects cannot be sufficiently obtained.

### (Other Blending Materials)

The heat transfer suppression sheet according to the present invention may contain, if necessary, materials contained in the heat transfer suppression sheet in the related art, such as other inorganic particles different from the first inorganic particle and the second inorganic particle, other inorganic fibers different from the first inorganic fiber and the second inorganic fiber, and an organic fiber.

As the inorganic fiber different from the first inorganic fiber and the second inorganic fiber, an aerogel composite material or the like can be used.

As the organic fiber, a cellulose fiber or the like can be used.

Note that, these fibers may be used alone or in combination in two or more kinds thereof.

As other inorganic particles, mica, a microporous particle, a thermally expandable inorganic material, aerogel, and an inorganic hydrate particle can be used. Note that, examples of the thermally expandable inorganic material include vermiculite, bentonite, mica, and perlite. Further, as organic particle, a hollow polystyrene particle or the like can be used.

Among them, an inorganic hydrate particle is preferred. The inorganic hydrate particle exhibit a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle form a porous material after releasing the crystal water, and exhibit a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2A1(OH)₃ → Al₂O₃ + 3H₂O

Note that, as will be described later, a battery pack according to the present invention preferably includes a heat transfer suppression sheet 10 interposed between battery cells, and in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

Note that, the thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

In the case where the inorganic hydrate particle is used, when the average particle diameter thereof is too large, it takes a certain amount of time for the inorganic hydrate near the center of the heat transfer suppression sheet to reach the thermal decomposition temperature thereof, so that the inorganic hydrate particle near the center of the heat transfer suppression sheet may not be completely thermally decomposed. Therefore, the average secondary particle diameter of the inorganic hydrate particle is preferably 0.01 µm or more and 200 µm or less, and more preferably 0.05 µm or more and 100 µm or less.

The total amount of other blending materials is preferably 10 mass% or less with respect to the total amount of the heat transfer suppression sheet.

### (Thickness of Heat Transfer Suppression Sheet)

In the present embodiment, the thickness of the heat transfer suppression sheet is not particularly limited, and is preferably in a range of 0.05 mm to 6 mm. When the thickness of the heat transfer suppression sheet is 0.05 mm or more, sufficient mechanical strength can be imparted to the heat transfer suppression sheet. On the other hand, when the thickness of the heat transfer suppression sheet is 6 mm or less, good assemblability can be obtained.

### (Heat Insulation Performance of Heat Transfer Suppression Sheet)

The heat conductivity can be mentioned as an indicator indicating the heat insulation performance. In the present embodiment, the heat conductivity is preferably less than 1 (W/m·K), more preferably less than 0.5 (W/m·K), and still more preferably less than 0.2 (W/m·K). Further, the heat conductivity is even more preferably less than 0.1 (W/m·K), even still more preferably less than 0.05 (W/m·K), and particularly preferably less than 0.02 (W/m·K). Note that the heat conductivity can be measured in accordance with "Testing method for heat conductivity of refractories" described in JIS R 2251.

### [2. Method for Producing Heat Transfer Suppression Sheet]

The heat transfer suppression sheet is produced by molding a material at least containing at least one of the first inorganic fiber and the first inorganic particle, the second inorganic fiber, the second inorganic particle, and the organic binder (hereinafter, referred to as "essential main components") using a dry molding method or a wet molding method. As the dry molding method, for example, a press molding method (dry press molding method) and an extrusion molding method (dry extrusion molding method) can be used.

### <2-1. Production Method Using Dry Press Molding Method>

In the dry press molding method, the essential main components and other blending materials are charged into a mixer such as a V-type mixer at a predetermined ratio. Then, the materials charged into the mixer are sufficiently mixed, and then the mixture is charged into a predetermined mold and press-molded to obtain a heat transfer suppression sheet. During the press molding, heating may be performed if necessary.

Note that, the press pressure during the press molding is preferably in a range of 0.98 MPa or more and 9.80 MPa or less. When the press pressure is less than 0.98 MPa, the obtained heat transfer suppression sheet may not be able to maintain the strength and may collapse. On the other hand, when the press pressure is more than 9.80 MPa, the processability may decrease due to excessive compression, or due to an increase in bulk density, solid heat transfer may increase and the heat insulation property may decrease.

In the case of using the dry press molding method, it is preferable to use a polyvinyl alcohol (PVA) as the organic binder, and any organic binder that is generally used in the case of using the dry press molding method can be used without particular limitation.

### <2-2. Production Method Using Dry Extrusion Molding Method>

In the dry extrusion molding method, the essential main components and other blending materials are added to water at a predetermined ratio and kneaded using a kneader, to prepare a paste. Thereafter, the obtained paste is extruded from a slit-shaped nozzle using an extrusion molding machine and further dried to obtain a heat transfer suppression sheet. In the case of using the dry extrusion molding method, it is preferable to use methylcellulose, watersoluble cellulose ether, or the like as the organic binder, and any organic binder that is generally used in the case of using the dry extrusion molding method can be used without particular limitation.

### <2-3. Production Method Using Wet Molding Method>

In the wet molding method, the essential main components and other blending materials are added to water at a predetermined ratio, mixed in water, and stirred using a stirrer, to prepare a mixed liquid. Thereafter, the obtained mixed liquid is dehydrated through a filtration mesh to prepare a wet sheet. Thereafter, the obtained wet sheet is heated and pressurized, whereby a heat transfer suppression sheet can be obtained.

Note that, before the heating and pressurizing step, a ventilation drying treatment may be performed in which hot air is passed through the wet sheet to dry the sheet, or the wet sheet may be heated and pressurized in a wet state without being subjected to the ventilation drying treatment. In addition, in the case of using the wet molding method, a cationized starch or an acrylic resin can be selected as the organic binder.

### [3. Battery Pack]

As shown in Fig. 4, a battery pack 100 according to the present embodiment includes a plurality of battery cells 20a, 20b, and 20c arranged in a row, connected in series or in parallel, and stored in a battery case 30, and the above heat transfer suppression sheet 10 is interposed between the battery cells 20a, 20b, and 20c. Note that, in Fig. 4, the above heat transfer suppression sheet 10 is interposed between the battery cells 20a, 20b, and 20c. However, the heat transfer suppression sheet 10 does not necessarily need to be interposed between the battery cells 20a, 20b, and 20c. For example, the heat transfer suppression sheet 10 may be disposed between the battery cells 20a, 20b, and 20c and the battery case 30, or may be attached to an inner surface of the battery case 30.

In such a battery pack 100, since the heat transfer suppression sheet 10 is interposed between the battery cells 20a, 20b, and 20c, the propagation of heat between the battery cells 20a, 20b, and 20c can be suppressed during normal use.

On the other hand, even when any of the battery cells 20a, 20b, and 20c experiences thermal runaway, the presence of the heat transfer suppression sheet 10 according to the present embodiment makes it possible to suppress the propagation of heat between the battery cells 20a, 20b, and 20c. Therefore, the chain reaction of the thermal runaway can be inhibited, and an adverse influence on other battery cells can be minimized.

Although not shown, in addition to being interposed between the battery cells 20a, 20b, and 20c, the heat transfer suppression sheet 10 may be attached directly to an inner bottom surface of the battery case 30, or may be disposed in a space between a ceiling surface or a side wall of the battery case 30 and the battery cells 20a, 20b, and 20c. Therefore, high versatility can be obtained, the effect of preventing a chain reaction of the thermal runaway caused by heat propagation between adjacent battery cells can be obtained, and when a certain battery cell ignites, it is also possible to suppress the flame from spreading to the outside of the battery case.

Further, the heat transfer suppression sheet can be easily bent, depending on selection of the components and the thickness thereof. Therefore, it is not influenced by the shape of the battery cell, and can be adapted to any shape. Specifically, it can be applied to cylindrical batteries, flat batteries, and the like, in addition to prismatic batteries.

For example, the battery pack according to the present embodiment is used in an electric vehicle (EV) or the like, and is sometimes disposed under a passenger's floor. In this case, even when the battery cell ignites, the safety of the passenger can be ensured. In this case, since the heat transfer suppression sheet interposed between the battery cells can also be disposed between the battery cell and the battery case, it is not necessary to newly prepare a flame retardant material or the like, and a safe battery pack can be easily formed at a low cost.

### Examples

A "glass fiber" was used as the first inorganic fiber, a "silica nanoparticle" was used as the first inorganic particle, an "alumina fiber" was used as the second inorganic fiber, a "titania particle" was used as the second inorganic particle, and an "acrylic resin" was used as the organic binder. Note that, the blending ratio (mass%) was glass fiber: silica nanoparticle: alumina fiber: titania particle: acrylic resin = 10:55:10:15:10.

Then, water was added thereto, followed by mixing in water and stirring with a stirrer, to prepare a mixed liquid. Thereafter, the obtained mixed liquid was dehydrated through a filtration mesh to prepare a wet sheet. Thereafter, the obtained wet sheet was heated and pressurized, whereby a heat transfer suppression sheet was obtained.

A cross section of the heat transfer suppression sheet immediately after production (during normal use) was photographed using an SEM. As shown in Fig. 1, it can be seen that the first inorganic fiber 1 (glass fiber) is entangled with the second inorganic fiber 3 (alumina fiber) to form a three-dimensional network, and the first inorganic particle 2 (silica nanoparticle) and the second inorganic particle (titania particle) 4 are retained. In addition, it can be seen that an organic binder (acrylic resin) 5, which appears black in the figure, has entered to the gaps and bound them.

Subsequently, the heat transfer suppression sheet was exposed to a high temperature of 800°C assuming thermal runaway of a battery cell, and the cross section thereof was photographed using an SEM. As shown in Fig. 2, it can be seen that the organic binder 5 (acrylic resin) disappears, and the first inorganic fiber 1 (glass fiber), the second inorganic fiber 3 (alumina fiber), the first inorganic particle (silica nanoparticle) 2, and the second inorganic particle (titania particle) 4 remain.

Fig. 3 shows an SEM photograph of the cross section of the heat transfer suppression sheet when the temperature is further raised to 1000°C. It can be seen that the second inorganic fiber (alumina fiber) 3 and the second inorganic particle (titania particle) 4 remain even at this temperature.

However, since the heat transfer suppression sheet is exposed to a high temperature of 1000°C, which is much higher than the glass transition point (Tg: 500°C to 550°C) of the first inorganic fiber (glass fiber) 1 and the first inorganic particle (silica nanoparticle) 2, as shown in portions A and B in Fig. 3, it can be seen that the first inorganic fiber (glass fiber) 1 and the first inorganic particle (silica nanoparticle) 2 are softened and deformed. The first inorganic fiber 1 and the first inorganic particle 2 are thought to function as a binder by spreading to fill the gaps between the second inorganic fiber (alumina fiber) 3 and the second inorganic particle (titania particle) 4.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2021-214812) filed on December 28, 2021, and the contents thereof are incorporated herein by reference.

### REFERENCE SIGNS LIST

1 first inorganic fiber (glass fiber)
2 first inorganic particle (silica nanoparticle)
3 second inorganic fiber (alumina fiber)
4 second inorganic particle (titania particle)
5 organic binder (acrylic resin)
10 heat transfer suppression sheet
20a, 20b, 20c battery cell
30 battery case
100 battery pack

## Claims

1. A heat transfer suppression sheet comprising:
at least one of a first inorganic fiber having a glass transition point of 800°C or lower and a first inorganic particle having a glass transition point of 800°C or lower;
a second inorganic fiber having a glass transition point of 1000°C or higher;
a second inorganic particle having a glass transition point of 1000°C or higher; and
an organic binder.

2. The heat transfer suppression sheet according to claim 1, wherein the first inorganic fiber has an average fiber diameter larger than an average fiber diameter of the second inorganic fiber.

3. The heat transfer suppression sheet according to claim 1 or 2, wherein the first inorganic fiber has an average fiber length larger than an average fiber length of the second inorganic fiber.

4. The heat transfer suppression sheet according to any one of claims 1 to 3, wherein the first inorganic fiber has a degree of crimp smaller than a degree of crimp of the second inorganic fiber.

5. The heat transfer suppression sheet according to any one of claims 1 to 4, wherein the first inorganic fiber is linear or acicular, and the second inorganic fiber is dendritic or curly.

6. The heat transfer suppression sheet according to any one of claims 1 to 5, wherein
the first inorganic fiber is an amorphous fiber, and
the second inorganic fiber is composed of at least one kind selected from an amorphous fiber and a crystalline fiber.

7. The heat transfer suppression sheet according to any one of claims 1 to 6, wherein the first inorganic fiber is a fiber composed of at least one kind selected from a glass fiber, glass wool, slag wool, rock wool, an alkaline earth silicate fiber, a refractory ceramic fiber, a basalt fiber, and a soluble fiber.

8. The heat transfer suppression sheet according to any one of claims 1 to 7, wherein the first inorganic particle is a particle composed of at least one kind selected from a silica particle, a zinc oxide particle, a calcia particle, and a magnesia particle.

9. The heat transfer suppression sheet according to any one of claims 1 to 8, wherein the second inorganic fiber is a fiber composed of at least one kind selected from an alumina fiber, an alumina silicate fiber, a carbon fiber, a silicon carbide fiber, a natural mineral-based fiber, and a zirconia fiber.

10. The heat transfer suppression sheet according to any one of claims 1 to 9, wherein the second inorganic particle is a particle composed of at least one kind selected from a titania particle, a zirconia particle, a zircon particle, and a barium titanate particle.

11. The heat transfer suppression sheet according to any one of claims 1 to 10, wherein a content of at least one of the first inorganic fiber and the first inorganic particle is equal to or larger than a content of the organic binder.

12. A battery pack comprising:
a plurality of battery cells connected in series or in parallel; and
the heat transfer suppression sheet according to any one of claims 1 to 11.
